# EUROPEAN PATENT SPECIFICATION

(11) **EP 1 189 723 B1**
(45) Date of publication and mention of the grant of the patent: **11.10.2006**
(21) Application number: 01921949.2
(22) Date of filing: 20.04.2001
(51) Int. Cl.: B23K 20/12

(54) **METHOD OF PROCESSING METAL MEMBERS**
VERFAHREN ZUM BEHANDELN METALLISCHER WERKSTOFFE
PROCEDE DE TRAITEMENT D'ELEMENTS METALLIQUES

(30) Priority: 28.04.2000 JP 2000130039
(43) Date of publication of application: 27.03.2002
(73) Proprietor: Mazda Motor Corporation, Aki-gun, Hiroshima-ken 735-0028 (JP)
(72) Inventor: GENDOH, Toshiyuki c/o MAZDA MOTOR CORPORATION, Aki-gun Hiroshima 735-0028 (JP); NOMURA, Seiji c/o MAZDA MOTOR CORPORATION, Aki-gun Hiroshima 735-0028 (JP)
(74) Representative: Gossel, Hans K.
(86) International application number: PCT/JP2001/003398
(87) International publication number: WO 2001/083153

(56) References cited:
- EP-A- 0 893 189
- DE-A- 19 731 638
- DE-A- 19 746 812
- GB-A- 1 385 473
- US-A- 4 144 110

## Description

### Technical Field

The present invention relates to a method of processing metal members such as aluminum alloy castings and plate materials.

### Background Art

In the current joining techniques, metal members such as plate materials or those having been press-formed into three-dimensional shapes are lapped one over the other and joined together by the use of resistance welding or arc welding, joining materials, bolt fastening, rivets, etc.

And if metal members are of complicated three-dimensional shape, the spot welding process is used in which a plurality of portions to be welded spotted in the metal members can be welded locally.

And as another joining technique, there is disclosed in Japanese Patent No. 2712838 a joining process in which metal members are stirred by the use of friction while being kept in a non-molten state. This joining technique is to join two metal members in the following steps of : inserting and translating a projected portion referred to as probe into the surface of the metal members subjected to welding, where two metal members are butted together, while rotating the probe; and plasticizing the metal structure in the vicinity of the above surface by the use of frictional heat generated by the rotating motion of the above probe.

In the joining technique described in the above patent, however, since the probe is inserted into and moved through the surface of the metal members, there remain traces of welding (holes) at the starting- and end-points of the probe's movement locus. This causes problems involving: the appearance of the metal members, that is, the metal members being unable to be used for the parts where the traces of welding are visible; the need to form an excess metal portion beforehand and locate the probe's starting- and end-points in such a portion so as to remove the traces of welding in the secondary processing; and the decrease in fatigue strength of the metal members if some traces of welding should remain.

DE 197 31 638 underlying the preamble of claim 1 describes a process of locally joining overlapping portions of two work peaces by frictional heat which is generated by pressing a single frictional pin on one of the work peaces and rotating this pin. Similarly, GB 13 85 473 describes a process of joining overlapping portions of two metal members by frictional heat which is generated by pressing a single rotary tool having a concave portion formed on its tip on one of the metal members and rotating this tool while pressing it on said metal member. However, it would be desirable to improve the efficiency of those known joining processes, particularly when a large number of metal members and/or rather thick metal members are to be joined to each other. Furthermore, EP 0 893 189 A2 discloses a friction stir welding method wherein spaced-apart portions of two hollow mold members are welded together by means of two rotors. The said two rotors process separate portions with no common treatment of the same work piece portion.

### Disclosure of Invention

The present invention has been made in light of the above problems; accordingly, the object of the present invention is to provide an efficient method of processing metal members which enables the construction of a strong member to member junction without causing thermal distortion and a trace of welding, particularly if a large number of members or rather thick members are to be joined.

In order to overcome the above problems and achieve the above object, the method of processing metal members according to the present invention is to join first and second metal members by lapping at least two metal members one over the other; placing a pair of rotors to be opposite to each other and putting the overlapping portion of the metal members between the rotors, each rotor having a concave portion formed substantially in the center of a planar tip portion of the respective rotor; pressing the tip portions of the rotors against the overlapping portion of the metal members while rotating the rotors in opposite directions; forming a non-molten stirred layer by stirring a joining portion of the metal members in a rotation direction of the rotors and in a direction of thickness of the metal members in the concave portion by the use of friction caused by the rotating motion and pressure of the rotors while keeping the joining portion in non-molten state.

According to this construction, metal members can be strongly joined without causing thermal distortion and a trace of welding.

Preferably concave and convex portions differing in height in the circumferential direction are formed in the tip of the above rotors. According to this construction, metal members can be strongly joined without causing thermal distortion and a trace of welding.

Another rotor is provided in such a manner as to face the tip portion of the above rotor via the first and second metal members, the two rotors being rotated in the opposite direction with the first and second metal members interposed between them.

According to this construction, the joining duration can be shortened, in addition, joining can be satisfactorily performed even if the total thickness of the metal members or the number of lapped metal members are large.

Preferably the first and second metal members are continuously joined while moving the rotors. This enables a strong metal member to metal member junction without causing thermal distortion and a trace of welding.

Preferably the above first and second metal members are joined in the following steps of: allowing an alloy material, which can mutually diffuse with the above first and second metal members, to intervene between the above first and second metal members at the portion subjected to joining; pressing and rotating the rotors against the portion of the above first and second metal members subjected to joining, and stirring the same portion by the use of friction caused by the rotating motion of the above rotor while keeping the same in a non-molten state, so as to form a non-molten stirred layer while expanding the non-molten stirred layer to said second metal member.

According to this construction, due to the use of an alloy material, a high joining strength can be obtained, in addition, different kinds of metal members can also be joined.

Preferably the above first and second metal members are joined while removing burrs produced on the above first metal member in the vicinity of the rotor due to the rotating and pressing motion of said rotor.

This enables the simplification of deburring processing after the completion of joining metal members.

The above method enables refinement of the metal structure and decrease in casting defects, thereby the material characteristics such as thermal fatigue (low cycle fatigue) life, elongation and impact resistance can be improved.

### Brief Description of Drawings

FIG. 1 is an enlarged view of a rotating tool and vicinity illustrating a lap joining method;
FIGS. 2A, 2B, 3A, 3B, 4A and 4B are views illustrating the shapes of the tip portions 3 of various possible types rotating tools 1, FIGS. 2A, 3A and 4A being the side views of the rotating tools, FIGS. 2B, 3B and 4B being the front views of the tip portions;
FIG. 5 is a schematic view of an articulated type robot which holds and drives a rotating tool;
FIG. 6 is a view illustrating a method of joining metal members;
FIG. 7 is a view illustrating a method of joining three or more metal members;
FIGS. 8A, 8B, 8C are views showing the plastic flow state within metal members when the tip portion of a rotating tool is flat;
FIGS. 9A, 9B and 9C are views showing the plastic flow state within metal members when a concave portion is formed in the tip portion of a rotating tool;
FIG. 10 is a view showing the plastic flow state within metal members when projections or grooves are formed in the tip portion of a rotating tool;
FIG. 11 is a schematic representation illustrating the method of testing the strength of the non-fusing frictionally-stirring joining of this embodiment;
FIG. 12 is a graph showing the results of the joining strength test conducted in accordance with the method shown in FIG. 11;
FIG. 13 is a view showing the case where body frames of an automobile are joined as metal members having been press-formed into three-dimensional shapes beforehand;
FIG. 14 is an enlarged view of a rotating tool and vicinity illustrating the case where joining is continuously performed while allowing the rotating tool to advance;
FIG. 15 is a view illustrating a method of joining metal members not according to the present invention in which joining is continuously performed while allowing a rotating tool to advance;

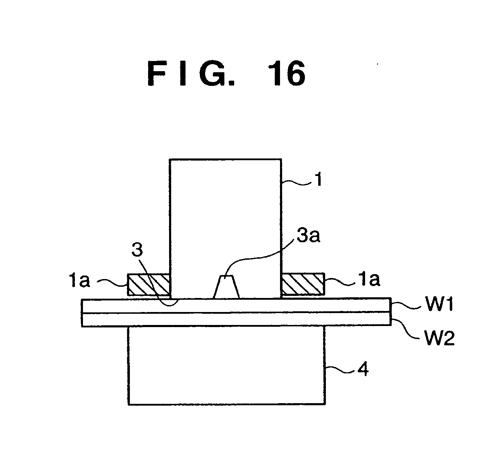

FIG. 16 is a view of a rotating tool, not according to the embodiment of the present invention, with radially extended portions formed on its periphery;
FIG. 17 is a cross-sectional view of the metal members joined in accordance with the embodiment of the present invention, showing the metal structure of the joined portion;
FIG. 18 is a view showing a state of metal members at the time of button rupture at a joining strength test;
FIG. 19 is a view showing a state of metal members at the time of separation rupture at a joining strength test;
FIG. 20 is a cross-sectional photographical view of the metal members joined in accordance with the embodiment of the present invention, showing the metal structure of the joined portion, which corresponds to FIG. 17;
FIG. 21 is an enlarged photographical view of a portion I of FIG. 20;
FIG. 22 is a cross-sectional photographical view of the metal members, showing the metal structure of a portion II of FIG. 21;
FIG. 23 is an enlarged photographical view of FIG. 22;
FIGS. 24A, 24B and 24C are views illustrating a method of joining first.and second metal members with an alloy material intervened between them;
FIGS. 25A, 25B and 25C are views illustrating a state in which an alloy material is diffusing at a portion P, where first and second metal members are subjected to joining;
FIGS. 26 to 29 are graphs showing the examples of controlling the number of revolutions and pressing force of a rotating tool in joining metal members;
FIGS. 30A, 30B, 30C and 30D are views showing the state in which a Zn-5Al layer and an aluminum alloy plate diffuse mutually to form a diffusion layer consisting of Al, Al-Zn, Zn-Al, Fe-Zn and Fe and subsequently to form an Al-Zn-Fe alloy layer, thereby the metal members are joined together;
FIG. 31 is a view of a tip portion of a rotating tool provided with cutting tips;
FIG. 32 is a view of a tip portion of a rotating tool provided with a burr suppressing bump;
FIG. 33 is a view illustrating the position on a rotating toll in which cutting tips or a burr suppressing bump is placed;
FIGS. 34A, 34B and 34C are views illustrating a method of deburring when a rotating toll is provided with cutting tips;
FIGS. 35A, 35B and 35C are views illustrating a method of deburring when a rotating toll is provided with a burr suppressing bump;
FIGS. 36A, 36B, 36C and 36D are views showing the case where cutting tips or a burr suppressing bump is provided in such a manner as to move up and down relative to the rotating tool and illustrating a method of deburring;
FIG. 37 is a table showing the percentage of the components contained in an aluminum alloy casting used for surface treatment; and
FIG. 38 is a view illustrating one example of the applications of the embodiment of the present invention to surface treatment, that is, illustrating a method of performing surface reforming treatment on the portion between the adjacent ports (the portion between valves) formed on a cylinder head of an automobile.

### Best Mode for Carrying Out the Invention

In the following an embodiment of the present invention will be described in detail with reference to the accompanying drawings.

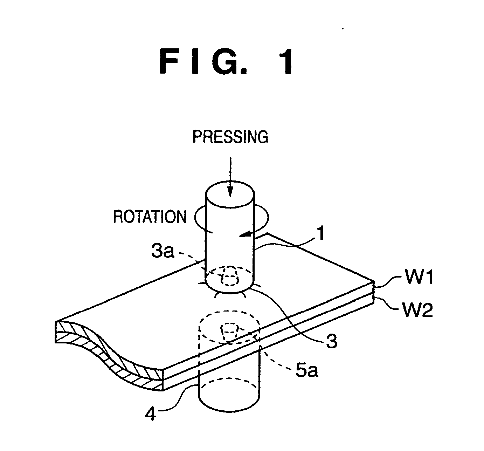

Referring to FIG. 1, there is first shown an enlarged view of a rotating tool and vicinity illustrating a lap joining method forming no embodiment of the invention as only one rotor is used.

The joining method applies to the joining of metal members such as aluminum alloy plate materials and those having been press-formed into three-dimensional shapes and is to join first and second metal members W1, W2 in the following steps of: lapping at least two metal members one over the other; pressing a rotating tool 1 against the outermost surface of the lapped members, that is, the first metal member W1; and stirring the metal structure between the first and second metal members W1 and W2 by the use of the frictional heat generated by the rotating motion of the rotating tool 1 while keeping the same in a non-molten state.

With this method, problems such as thermal distortion caused by, for example, the electric resistance welding can be gotten rid of because the metal structure is stirred while being kept in a non-molten state.

The terms "to stir the metal structure while keeping the same in a non-molten state" herein used means that the metal structure is softened by the frictional heat generated by the rotor's rotational motion under temperatures lower than the lowest melting point of the components or eutectic contained in the metal material and stirred.

As shown in FIG. 1, the joining method involving stirring by the use of friction is to join first and second metal members W1, W2 in the following steps of: lapping at least two metal members W1, W2 one over the other; pressing a planar tip 3 of a cylindrical rotating tool 1 against the outermost surface of the lapped metal members, that is, the first metal member W1 while rotating the same around its axis; and stirring the portion of the above first and second metal members W1, W2 to be joined by the use of friction caused by the rotating motion of said rotor while keeping the same in a non-molten state, so as to form a non-molten stirred layer while expanding the non-molten stirred layer to said second metal member W2.

And a receiving member 4 is provided in such a manner as to face the tip 3 of the rotating tool 1 across the first and second metal members W1, W2. The receiving member 4 is designed to have an outside diameter larger than that of the rotating tool 1.

The diameter φ1 of the rotating tool 1 is about 10 to 15 mm. Although both the rotating tool 1 and the receiving member 4 are non-wearing type tools formed of steel (super hard alloys etc.) with hardness higher that that of the metal members, the material of the metal members is not intended to be limited to aluminum alloys as long as it is softer than that of the rotating tool 1.

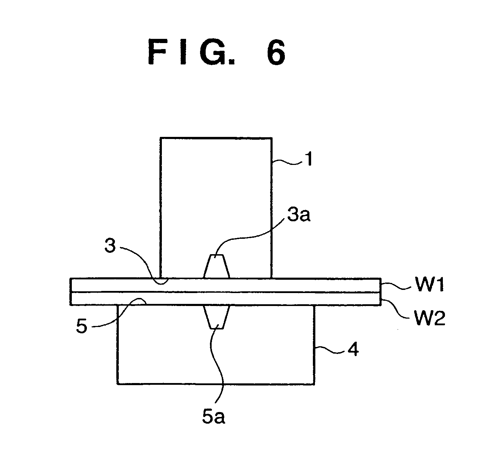

As is also shown in FIG. 6, a concave portion 3a is formed almost in the center of the tip portion 3 of the rotating tool 1. And a concave portion 5a is formed almost in the center of the tip portion 5 of the receiving member 4.

The respective concave portions 3a and 5a can be provided in either the rotating tool 1 or the receiving member 4, or in both of them.

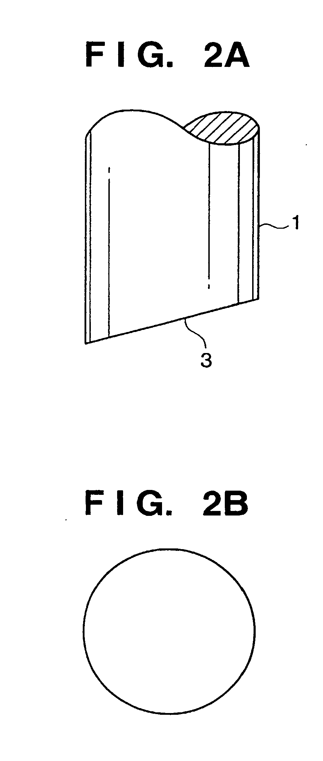

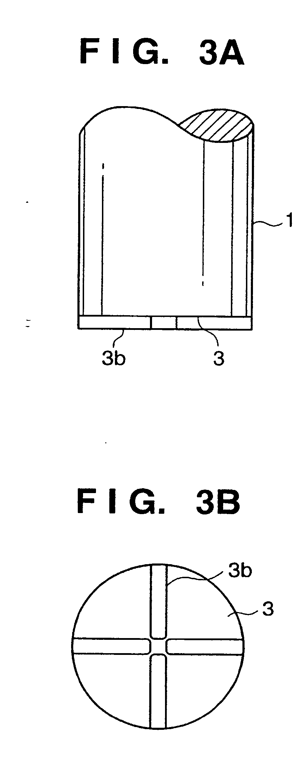

FIGS. 2A, 2B, 3A, 3B, 4A and 4B are views illustrating different shapes of the tip portions 3 of various types rotating tools 1, FIGS. 2A, 3A and 4A being side views of the rotating tools, FIGS. 2B, 3B and 3C being front views of the tip portions.

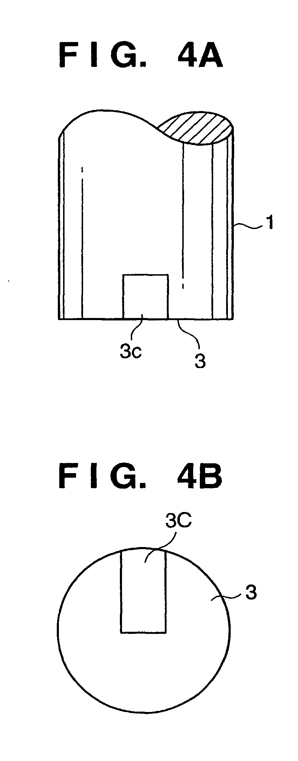

In the rotating tool 1 shown in FIGS. 2A and 2B, the tip portion 3 is formed in such a manner as to have a slope relative to the contact surface on which it comes in contact with the metal member and configured so that the height from the contact surface can vary. And in the rotating tool 1 shown in FIGS. 3A and 3B, the planar tip portion 3 is provided with a plurality of projections (or grooves) 3b radiating from its center to the periphery. In the rotating tool 1 shown in FIGS. 4A and 4B, the planar tip portion 3 is provided with at least one groove (or projection) 3c running from its center to the periphery so that the height of the tip portion varies in the circumferential direction.

The rotating tool 1 has only to have the concave portion 3a shown in FIG. 1 which can be combined with any one of the shapes of the tip portions 3 shown in FIGS. 2A, 2B, 3A, 3B, 4A and 4B. Too high projections and too deep grooves are not suitable since the stirring characteristics of the rotating tool 1 to the metal members deteriorate.

The rotating tool 1 is attached to the arm of an articulated type robot 10 described later in a rotatable manner and is formed in such a manner that, when the metal members to be joined have complicated three-dimensional shapes, it can join them locally at a plurality of portions spotted in the metal members to be welded.

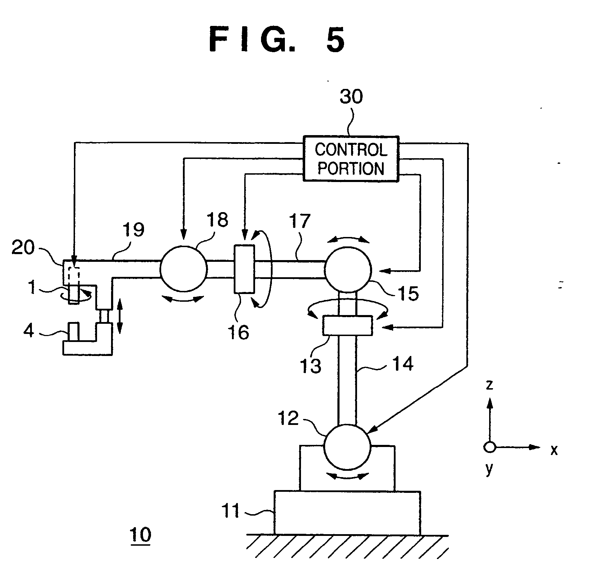

FIG. 5 is a schematic view of an articulated type robot which holds and drives a rotating tool.

As shown in FIG. 5, the articulated type robot 10 is connected to a joint 12 provided in the base 11 and swings around the y-axis, and it includes a first arm 14 rotating around the z-axis at a joint 13, a second arm 17 connected to the first arm 14 via a joint 15 and swinging around the y-axis while rotating around the x-axis at a joint 16, and a third arm 19 connected to the second arm 17 via a joint 18 and swinging around the y-axis.

The third arm 19 is to have a rotating tool 1 attached thereto in a rotatable manner and includes a motor 20 for rotatablly driving the rotating tool 1 and a receiving member 4 arranged in such a manner as to face the tip portion 3 of the rotating tool 1. The spacing between the tip portion 3 of the rotating tool 1 and the tip portion of the receiving member 4 is variable with an actuator 22 and is designed so that it can deal with the pressing force exerted on metal members during the joining operation and with three or more metal members lapped one over the other.

The operation of the arms, motor and actuator of the articulated type robot 10 is taught the robot beforehand and controlled by a control portion 30.

The pressing force to be exerted by the rotating tool 1 on the metal members is set for each joining portion based on the total plate thickness and lapping number of the metal members, and this applies to the case where plate thickness differs from member to member.

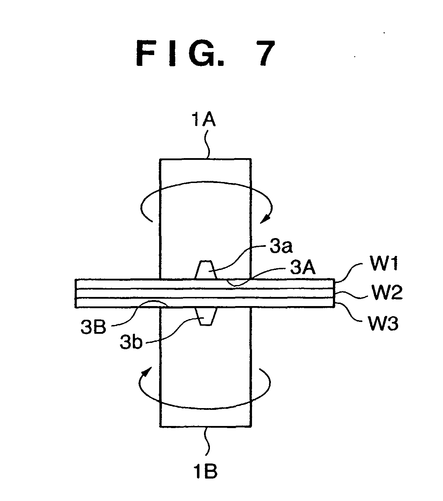

When joining three or more metal members, for example, a first metal member W1 to a third metal member W3, in accordance with the invention the joining is performed using a pair of rotating tools 1A, 1B which may be the same in outside diameter in such a manner as to interpose the metal members between them, as shown in FIG. 7. In this case, the rotating tool 1B, instead of the receiving member 4 shown in FIG. 5, is attached to the articulated type robot 10 in a rotatable manner, and the rotating tools 1A, 1B are rotated in the opposite direction to each other with the first metal member W1 to the third metal member W3 interposed between their tip portions 3A, 3B which are facing each other.

Even if the first and second metal members W1, W2 are different in thickness, they can be joined; and stirring becomes easier particularly when pressing the rotating tool 1 from the side of the metal member of smaller thickness, thereby uniform joining processing can be realized.

### [Plastic Flow of Metal Structure during Joining]

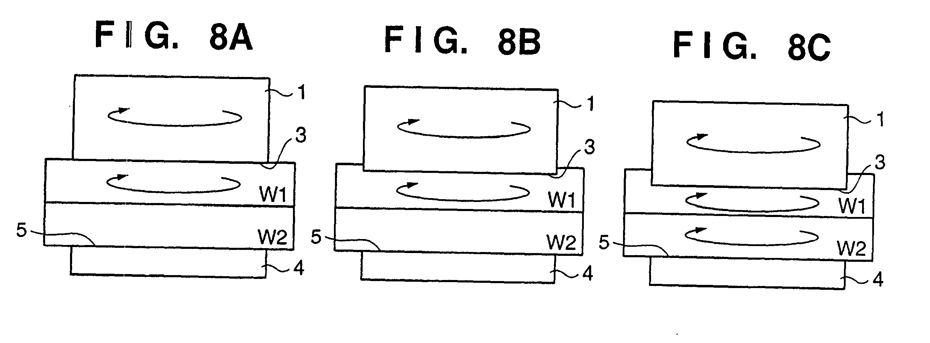

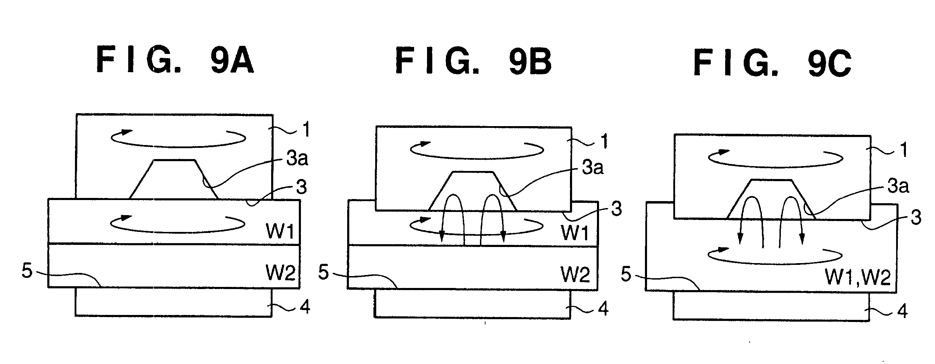

FIGS. 8A, 8B and 8C are views showing the plastic flow state within metal members when the tip portion of a rotating tool is flat. FIGS. 9A, 9B and 9C are views showing the plastic flow state within metal members when a concave portion is formed in the tip portion of a rotating tool.

As shown in FIGS. 8A, 8B and 8C, in cases where a rotating tool 1 is used of which tip portion 3 is flat (for convenience in description, the tip portion 5 of a receiving member 4 shall be flat), when continuing to press the rotating tool 1 rotating at given rpm against a first metal member W1 in the direction almost perpendicular to the same, friction is caused between the rotating tool 1 and the first metal member W1, thereby the surface of the first metal member W1 is softened, and the metal structure between the first and second metal members W1, W2 gets stirred in such a direction that the rotating tool 1 rotates while being kept in a non-molten state. And increasing the pressing force of the rotating tool 1 against the first metal member W1 expands the non-molten frictionally-stirred layer to the metal member W2, which is out of contact with the rotating tool 1, and finally the first and second metal members W1, W2 lapped one over the other are joined together while being kept in a non-molten state.

As shown in FIGS. 9A, 9B and 9C, in cases where a rotating tool 1 with a concave portion 3a formed in its tip portion 3 is used (for convenience in description, the tip portion 5 of a receiving member 4 shall be flat), when continuing to press the rotating tool 1 rotating at given rpm against a first metal member W1 in the direction almost perpendicular to the same, friction is caused between the rotating tool 1 and the first metal member W1, thereby the surface of the first metal member W1 is softened, and the metal structure between the first and second metal members W1, W2 gets stirred in such a direction that the rotating tool 1 rotates while being kept in a non-molten state. And increasing the pressing force of the rotating tool 1 against the first metal member W1 starts to expand the non-molten frictionally-stirred layer to the second metal member W2, which is out of contact with the rotating tool 1. At this time, the metal structure gets stirred in such a direction that the tool 1 rotates and at the same time gets stirred in the direction of its thickness (in the direction perpendicular to the surface of the metal members to be joined) within the concave portion 3a, and finally the first and second metal members W1, W2 lapped one over the other are joined together while being kept in a non-molten state.

Providing a concave portion 3a in the rotating tool 1 promotes the plastic flow within the concave portion, where the circumferential speed of the metal structure stirred is almost zero, and providing a concave portion 5a in the receiving member 4 promotes the plastic flow of the metal member out of contact with the rotating tool 1.

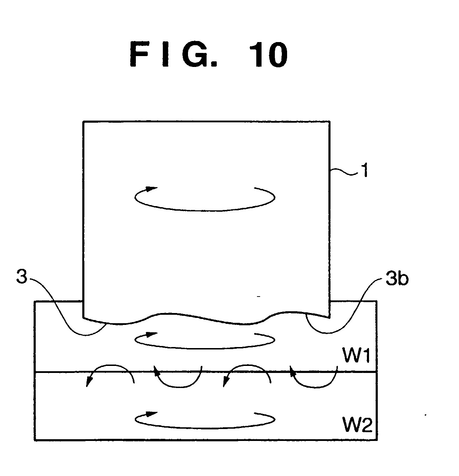

As shown in FIG. 10, in cases where a rotating tool 1 with projections (or grooves) 3b formed in its tip portion 3 is used (for convenience in description, the tip portion 5 of a receiving member 4 shall be flat), the metal structure is stirred in such a direction that the tool 1 rotates due to the radial unevenness formed in the tip portion 3, and at the same time, the interface between first and second metal members W1, W2 is subjected to plastic flow periodically changing its direction up and down (the direction perpendicular to the metal members' surface to be joined) according to the rotation of the tool 1. This periodical up-and-down plastic flow promotes the diffusion of the interface between the two metal members, and finally the first and second metal members W1, W2 lapped one over the other are joined together while being kept in a non-molten state.

As described above, in cases where the tip portion 3 of the rotating tool 1 is provided with a concave portion 3a, the entire metal structure to be joined is fully stirred; therefore, the joining strength of the metal members is increased. On the other hand, in cases where the tip portion 3 of the rotating tool 1 is not provided with a concave portion 3a and is flat, the metal structure is not fully stirred in the direction perpendicular to the surface of the metal members to be joined; therefore, the joining strength becomes low.

In cases where an radial unevenness is formed in the rotating tool 1, the state in which the tip portion of the rotating tool 1 is in contact with the metal structure is different from that of the cases where a concave portion 3a is formed in the same, and the angular speed of the metal structure subjected to stirring at the central portion can be set smaller than that of the circumferential portion; thus, the rotating tool 1 with a radial unevenness formed in its tip portion has the advantages over that with a concave portion 3a formed in its tip portion that it has excellent stirring characteristics and easily causes three-dimensional plastic flow, that is, plastic flow in such a direction that it rotates as well as up and down in a wider range of its tip portion.

### [Test Results]

Although the joining processing of this embodiment used steel plates JIS 6000 (Al-Mg-Si steel plates) standardized in accordance with JIS as metal members, steel plates JIS 5000 (Al-Mg steel plates) and some other metal materials are also applicable.

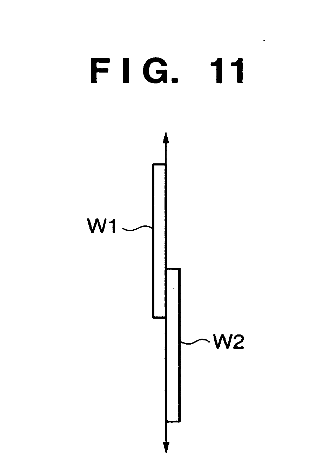

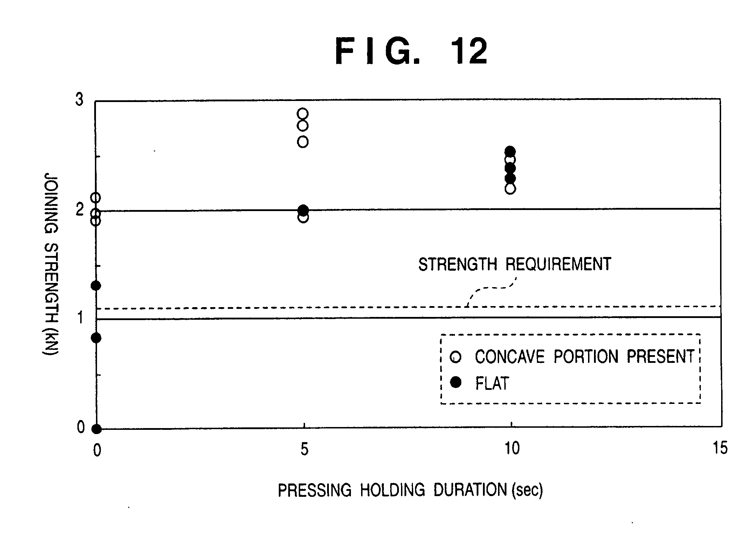

FIG. 11 is a schematic representation illustrating the method of testing the strength of the non-fusing frictionally-stirring joining of this embodiment. FIG. 12 is a graph showing the results of the joining strength test conducted in accordance with the method shown in FIG. 11.

In the joining strength testing method shown in FIG. 11, the joining strength is indicated with the tensile force by which the joined surface is separated when pulling the first and second metal members W1, W2 in the opposite direction to each other.

The joining conditions were such that the revolution number of the rotating tool 1 was 2000 rpm, the tip portion 3 of the rotating tool 1 was 10 mm in diameter φ, the pressing duration meant the duration after pressing the rotating tool 1 against the metal members the depth of 0.2 mm, and the metal members used were JIS 6000 with thickness 1 mm.

As shown in FIG. 12, when using a rotating tool 1 with a concave portion 3a formed in it tip portion 3, the joining strength became higher than when using a rotating tool 1 with a flat tip portion 3 and the strength requirement was satisfied.

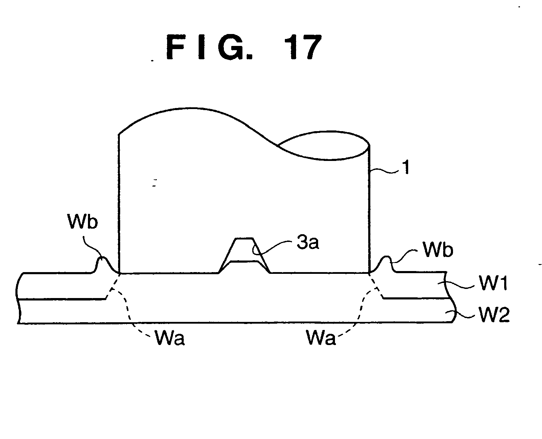

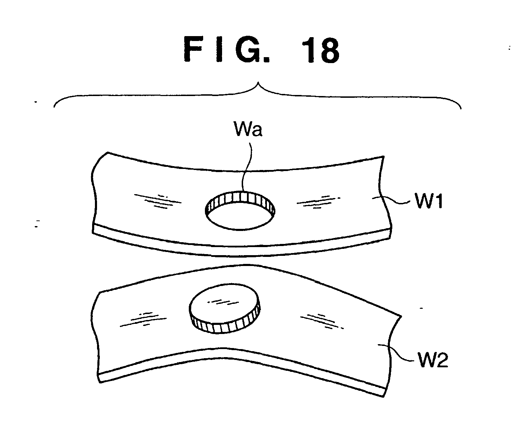

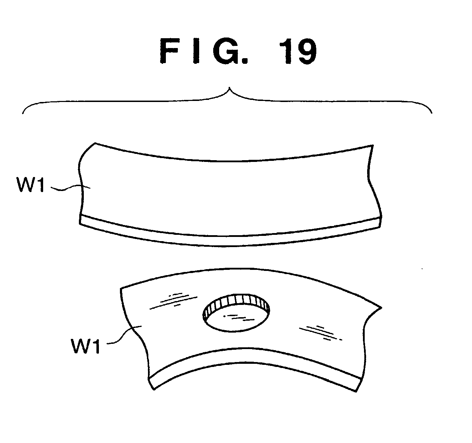

Further, in cases where a tool with a flat tip portion 3 was used, when trying to break the joined metal members, first a separation rupture occurred at the joined surface of the metal members, causing the metal members to separate from each other there, as shown in FIG. 19. On the other hand, in cases where a tool with a concave portion 3a formed in its tip portion 3 was used, when trying to break the joined metal members, the metal members did not separate from each other at the joined surface, but first a button rupture occurred in which the portion Wa corresponding to the periphery of the rotating tool 1 ruptured, as shown in FIGS. 17 and 18. Thus, it is apparent that higher joining strength can be obtained when using a tool with a concave portion 3a formed in its tip portion 3.

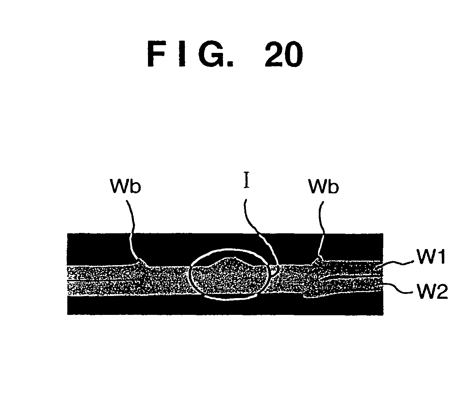

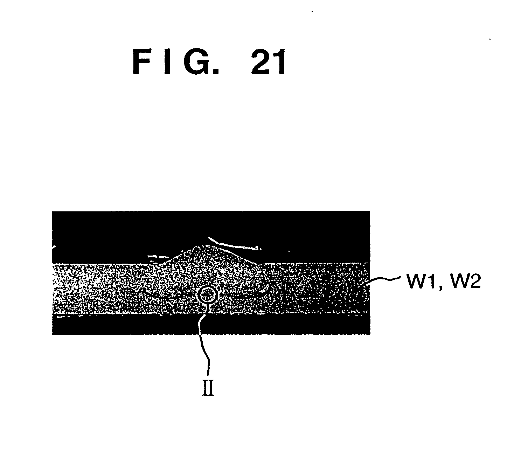

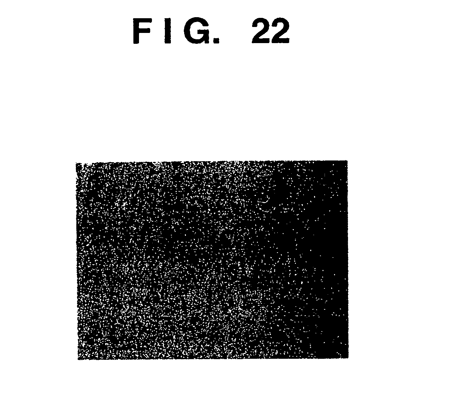

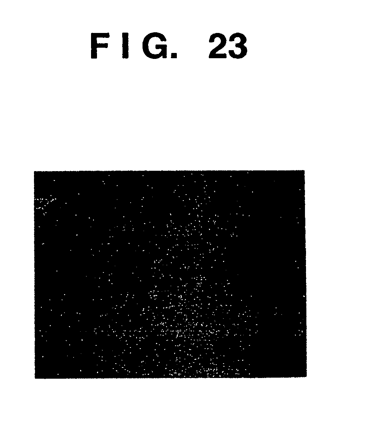

Further, as shown in FIGS. 20 to 23, in cases where joining was performed using a tool with a concave portion 3a formed in its tip portion 3, since the interface between the metal members to be joined was fully stirred so as to be uniform, higher joining strength was obtained.

The longer the pressing duration of the rotating tool 1 against the metal members becomes, the higher the joining strength becomes; however, when the pressing duration is about 10 seconds or longer, almost the same joining strength can be obtained both in the use of the rotating tool 1 with a concave portion 3a formed in its tip portion 3 and in the use of the rotating tool 1 with a flat tip portion 3.

### [Joining With Alloy Material Intervention]

First and second metal members can be joined with an alloy material intervened between them.

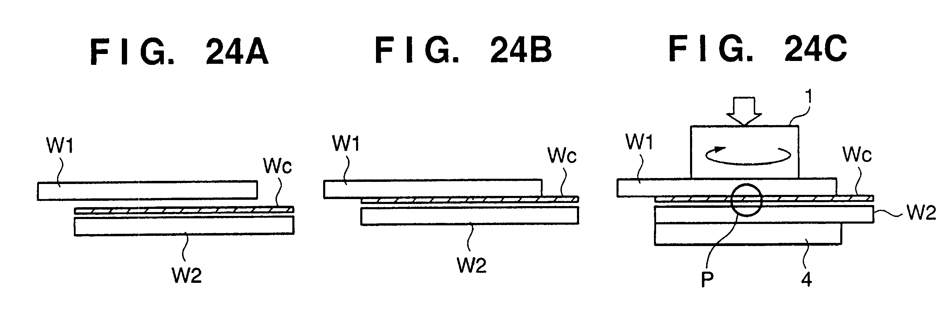

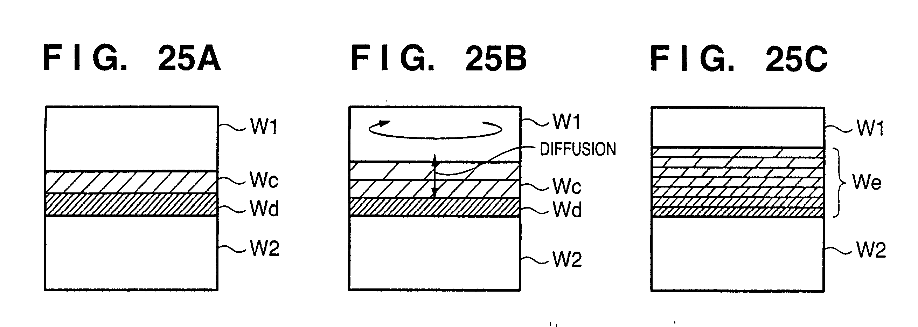

FIGS. 24A, 24B and 24C are views illustrating a method of joining first and second metal members with an alloy material intervened between them. FIGS. 25A, 25B and 25C are views illustrating a state in which the alloy material is diffusing at a portion P, where the first and second metal members are subjected to joining.

As shown in FIGS. 24A, 24B, 24C, 25A, 25B and 25C, for example, the first metal member W1 is an aluminum alloy plate and the second metal member W2 is a Fe steel plate with a Zn-5Al or Zn hot-dipping layer Wc, as an alloy material, formed thereon via a Zn-Fe-Al or Zn-Fe alloy layer Wd. The Zn-5Al layer consists of a eutectic composition of about 95 % by weight Zn component and about 5 % by weight Al component. Preferably the Zn-5Al layer consisting of an aluminum alloy and Zn-5Al alloy material coated thereon is optimal. The Zn hot-dipping layer is commercially available in the form of a rust-preventive coating provided over a metal member.

When lapping the first and second metal members W1, W2 one over the other via the Zn-5Al or Zn hot-dipping layer Wc, as an alloy material, and pressing a rotating tool 1 against the surface portion of the first metal member W1 corresponding to the portion P joined to the second metal member W2, the aluminum alloy is stirred by friction caused by the rotation of the rotating tool 1 and starts plastic flow. When promoting the plastic flow, the oxide film on the surface of the aluminum alloy is broken and the Zn-5Al or Zn hot-dipping layer Wc and the aluminum alloy start to diffuse mutually to form a diffusion layer consisting of Al, Al-Zn, Zn-Al, Fe-Zn and Fe. And when further promoting the plastic flow, the diffusion layer becomes an Al-Zn-Fe alloy layer We, and the aluminum alloy plate W1 and the steel plate W2 are joined together via the Al-Zn-Fe alloy layer We.

When joining a steel plate without Zn-5Al or Zn hot-dipping layer Wc and an aluminum alloy plate together, an alloy material such as a Zn-5Al layer or Zn alloy foil may be allowed to intervene specially between the two members just at the portion P to be joined. Further, as the alloy material, not only Zn-Al layer but also Mg-Al layer may be formed on the second metal member W2.

As a rotating tool 1, not one with a flat tip portion but ones with tip portions having concave portions in the center are used according to the invention.

The rotating tool 1 is pressed against any one of the first and second metal members W1, W2 which has a lower melting point than the other one, so as to stir the metal structure of the members by the use of friction caused by the rotating tool's rotation.

Pressing the rotating tool from the side of the aluminum alloy member, which is softened by little heating compared with the steel plate member having a higher melting point and a higher strength at elevated temperature than the aluminum alloy, allows the metal members to be joined in a short period of time, thereby reduces the thermal and mechanical loads applied to the tool, and therefore, has the advantage that it can increase the tool life.

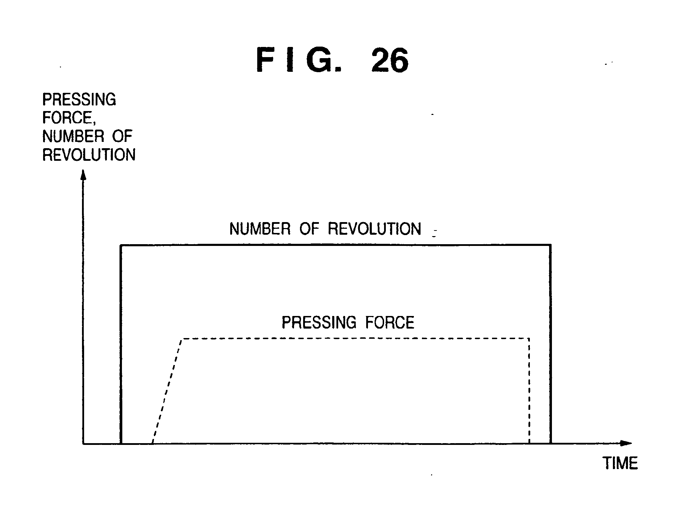

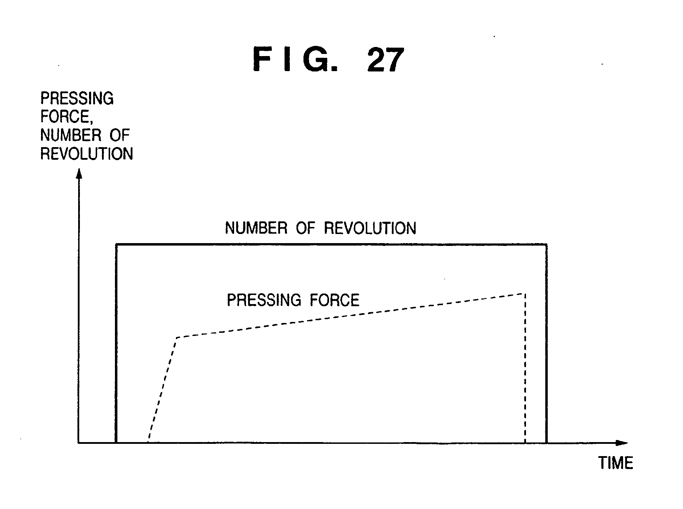

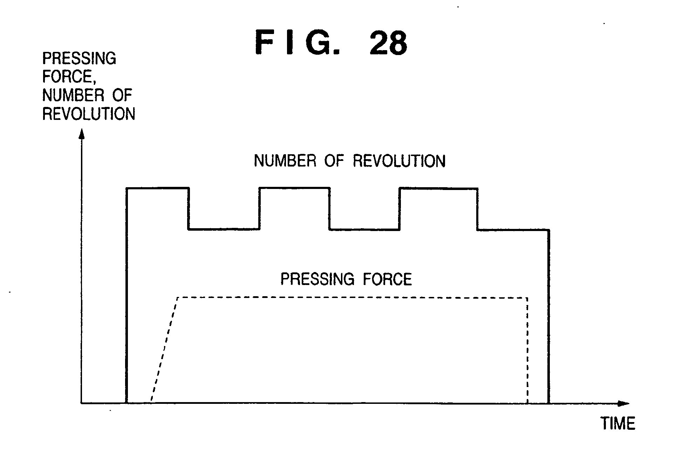

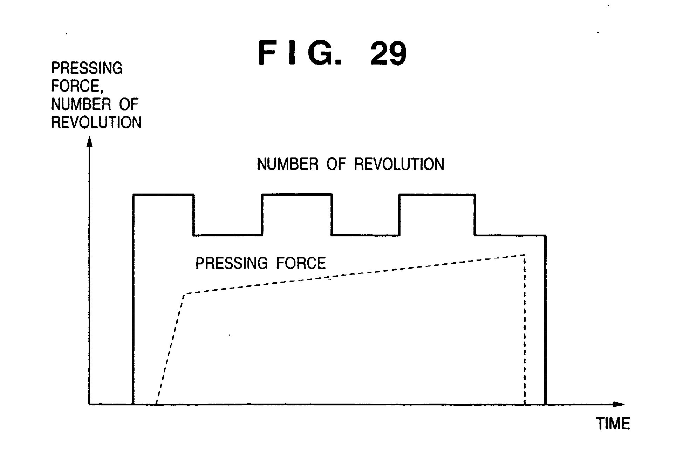

As shown in FIGS. 26 to 29, the number of revolutions of the rotating tool 1 against the metal members may be kept constant at about 1000 rpm (FIGS. 26, 27) or may be changed periodically so as to promote the breaking of the oxide film on the aluminum alloy member (FIGS. 28, 29). Decreasing the number of revolutions causes joining to take a longer time, therefore, is not preferable.

The pressing force of the rotating tool 1 against the metal members is kept constant (FIGS. 26, 28) or is gradually increased (FIGS. 27, 29). Decreasing the pressing force causes an unsatisfactory plastic flow, thereby makes it impossible to obtain satisfactory joining strength.

As for the relationship between the number of revolutions and the pressing force, the pressing force must be increased as the metal structure is softened.

### [Diffusion Joining of Alloy Material]

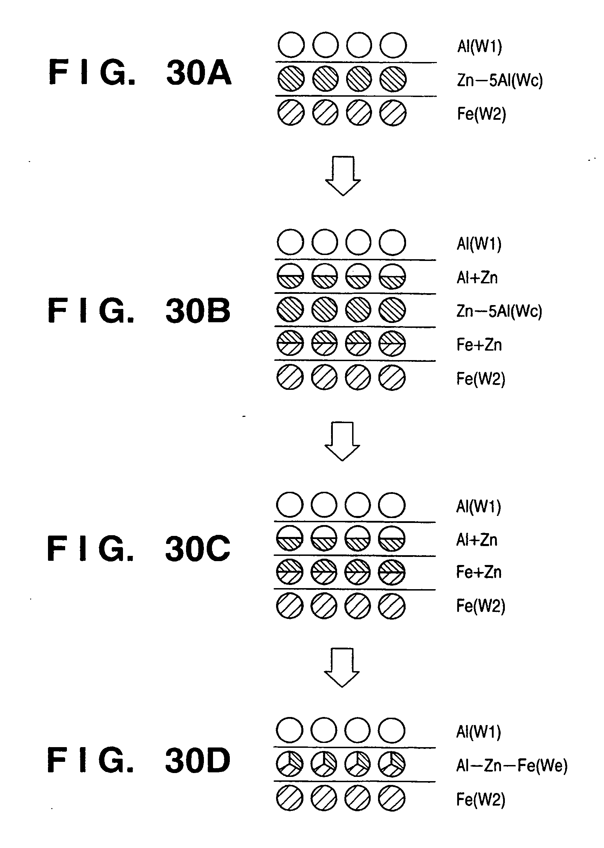

FIGS. 30A, 30B, 30C and 30D are views showing the state in which a Zn-5Al layer and an aluminum alloy plate diffuse mutually to form a diffusion layer consisting of Al, Al-Zn, Zn-Al, Fe-Zn and Fe, then plastic flow is further promoted to form an Al-Zn-Fe alloy layer We, and finally the aluminum alloy plate W1 and a steel plate W2 is joined together via the Al-Zn-Fe alloy layer We.

When lapping the aluminum alloy plate and the Fe steel plate one over the other with a Zn-5Al layer intervening between them, as shown in FIG. 30A, and stirring the metal structure of the lapped plates by the use of friction caused by the rotating tool 1 while keeping the same in a non-molten state, a diffusion layer consisting of Al and Zn-5Al layers is formed at the bottom of the aluminum alloy plate and a diffusion layer consisting of Fe and Zn-5Al layers is formed on the top of the Fe steel plate, as shown in FIG. 30B.

When allowing the plastic flow to progress by further stirring the metal structure, Zn component of the Zn-5Al layer is further diffused in the aluminum alloy plate and Fe steel plate, and this diffusion reaction gradually decreases the ratio of Zn component (increases the ratio of Al component) in the Zn-5Al layer, as shown in FIG. 30C.

When allowing the plastic flow in the state shown in FIG. 30C to further progress, a diffusion reaction occurs between the diffusion layers on the aluminum alloy plate side and on the Fe steel plate side; as a result, an Al-Zn-Fe alloy layer is formed as shown in FIG. 30D.

As described above, the first and second metal members W1, W2 are joined together via an Al-Zn-Fe three-component system alloy layer. This can prevent a brittle intermetallic compound, that is, Fe-Al, from forming on the junction surface of the first metal member W1 and second metal member W2; thus, the Al-Zn-Fe three-component system alloy layer allows a very high joining strength.

### [Shape of Metal Members]

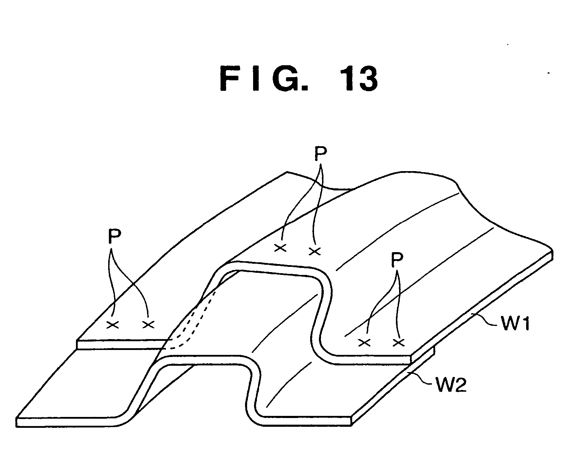

The embodiment of the present invention is suitable for joining metal members having been press-formed into three-dimensional shapes beforehand. Specifically, in cases where the metal members have been press-formed into complicated three-dimensional shapes and a plurality of portions P to be joined are so spotted that a rotating tool 1 cannot be moved continuously, like the case where a body frame W1 of an automobile and its reinforcing member W2 are joined, as shown in FIG. 13, if the joining method according to this embodiment is used, such metal members as are press-formed into complicated shapes can be locally welded and joined together.

### [Deburring Structure]

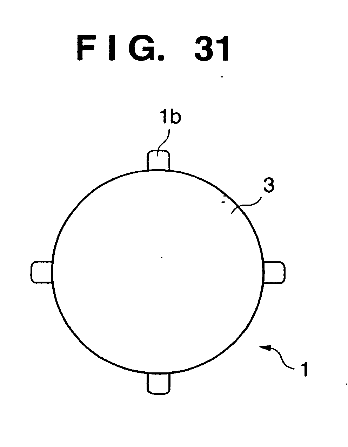

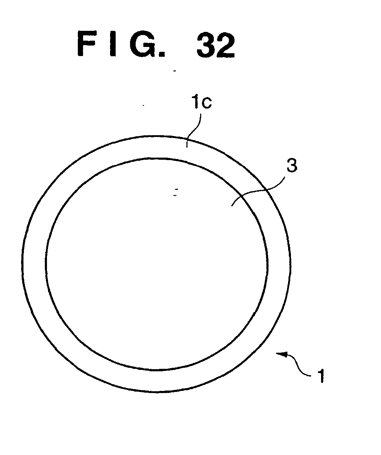

FIG. 31 is a view of a tip portion of a rotating tool provided with cutting tips. FIG. 32 is a view of a tip portion of a rotating tool provided with a burr suppressing bump. To be embodiments of the invention, it is to be understood those rotating tools have the concave portion in the center of its tip as shown before.

In order to remove burs Wb (refer to FIG. 17) produced on metal members during the joining operation, cutting tips 1b, which are radially extended portions, or a burr suppressing bump 1c may be integrally or separately formed on the periphery surface near the tip portion of a rotating toll 1 as shown in FIGS. 31 and 32.

The cutting tips 1b are flat and in parallel with the tip portion 3, and the periphery surface near the tip portion of the rotating tool 1 is provided with four cutting tips at 90° intervals. The cutting tips 1b are not necessarily flat, but they may be formed into spiral cutting blades for example. And the number of the tips can be set arbitrarily according to the components of the metal members and to the depth to which the rotating tool 1 is pressed.

The burr suppressing bump 1c is flat and in parallel with the tip portion 3 and is formed on the entire periphery surface near the tip portion 3 of the rotating tool 1.

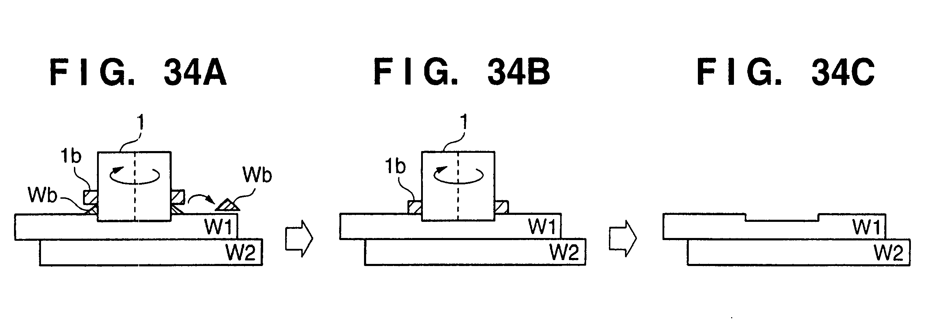

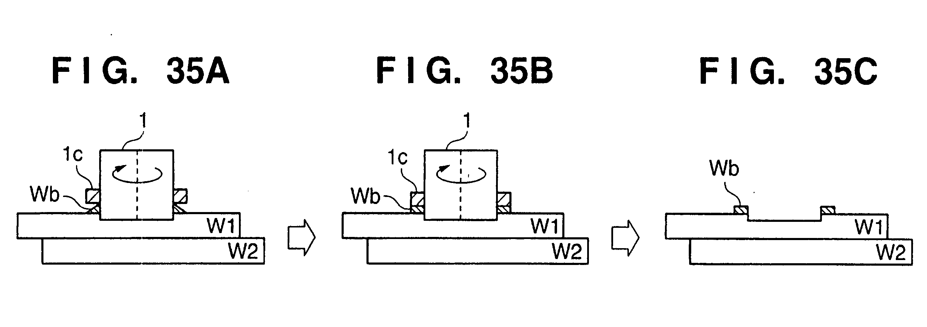

FIGS. 34A, 34B and 34C are views illustrating a method of deburring when a rotating toll is provided with cutting tips. FIGS. 35A, 35B and 35C are views illustrating a method of deburring when a rotating toll is provided with a burr suppressing bump.

In cases where cutting tips 1b are used in removing burrs Wb, the burr Wb produced on a metal member W1 in the vicinity of a rotating tool 1 is cut away by rotating and pressing the rotating tool 1 against the metal member W1, as shown in FIGS. 34A, 34B and 34C.

In cases where a burr suppressing bump 1c is used in removing burrs Wb, the burr Wb produced on a metal member W1 in the vicinity of a rotating tool 1 is crushed by rotating and pressing the rotating tool 1 against the metal member W1, as shown in FIGS. 35A, 35B and 35C.

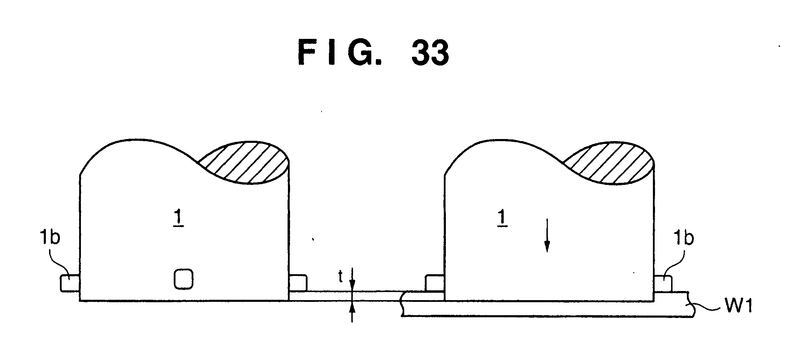

The cutting tips 1b or burr suppressing bump 1c is formed on the rotating tool 1 in such a position that it is axially away from the tip portion 3 by t, which is the depth to which the tip portion of the rotating tool 1 is pressed, as shown in FIG. 33.

The use of the cutting tips 1b allows complete deburring; however, it also allows chips Wb to be produced, in addition, makes the rotating tool 1 costly because hard cutting tips 1b must be used. On the other hand, the use of the burr suppressing bump 1c makes the junction surface a little inferior in appearance because the crushed burr Wb remains the junction surface; however, it has the advantages that the rotating tool 1 is not costly and chips are not produced.

The cutting tips 1b or burr suppressing bump 1c is not necessarily fixed on the rotating tool 1, it may be formed in such a manner as to move up and down coaxially relative to the axis of rotation of the rotating tool 1.

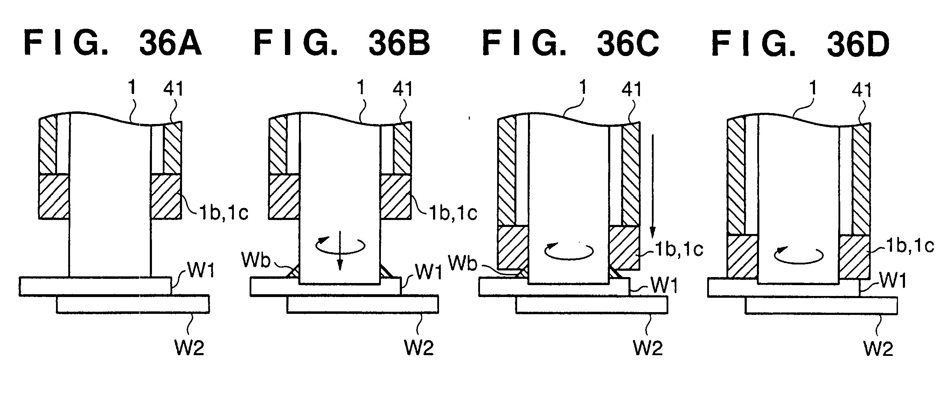

FIGS. 36A, 36B, 36C and 36D are views showing the case where cutting tips 1b or a burr suppressing bump 1c is provided in such a manner as to move up and down relative to the rotating tool and illustrating a method of deburring in such a case.

As shown in FIGS. 36A, 36B, 36C and 36D, the cutting tips 1b or burr suppressing bump 1c is provided on the tip portion of a hollow shaft 41 which can move up and down (or is rotatable around) the periphery surface of the rotating tool 1 coaxially relative to the axis of rotation of the same.

In cases where this up-and-down type cutting tip 1b or burr suppressing bump 1c is used in removing burrs Wb, during the joining operation shown in FIGS. 36A and 36B, it is allowed to move up and be away from the portion to be joined, and after completion of the joining, it is allowed to move down, so as to remove the burr Wb by cutting or crushing the same, as shown in FIGS. 36C and 36D.

Allowing the cutting tips 1b or burr suppressing bump 1c to be movable requires complicated and expensive equipments compared with the case where the cutting tips 1b or burr suppressing bump 1c is fixed; however, it has the advantage that, when varying the pressing depth of the rotating tool according to the metal members, it can be dealt with by the same single tool.

### [Continuous Joining]

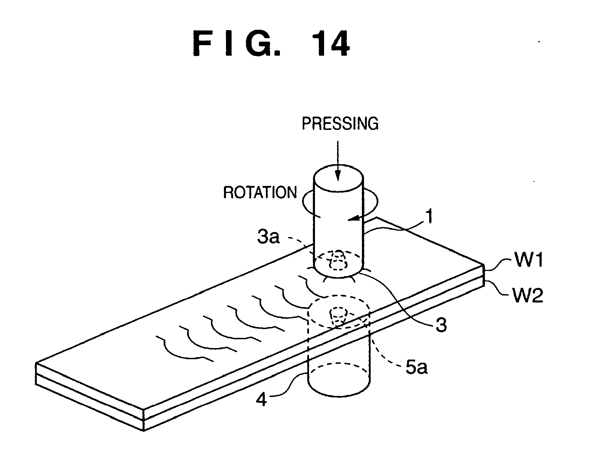

In the above embodiment, one example of the spot joining has been described in which rotating tools are pressed against the portion of the metal members to be joined and not moved; however, joining may be performed continuously while allowing the rotating tool 1 to advance or swing, as shown in FIG. 14.

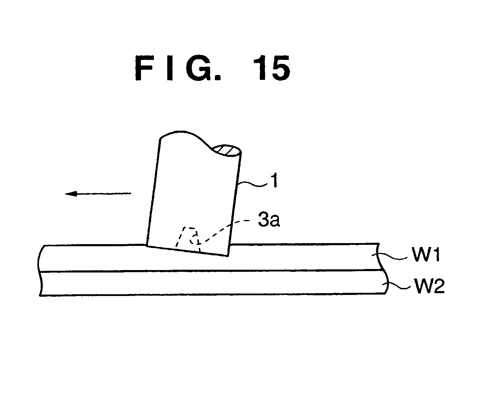

When allowing the rotating tool 1 to advance as shown in FIG. 14, if the rotating tool 1 is allowed to move while being tilted rearward at the angle of about 1° as shown in FIG. 15, its stirring characteristics are improved compared with the case where it is pressed against the metal members perpendicularly.

### [Variation]

As a variation of the embodiment of the present invention, joining can be performed while cooling the portion of the metal members to be joined, in order to suppress the distortion of metal members. As a cooling method, joining may be performed in cooling water, or cooling water may be supplied to the joining portion.

Further, in order to remove burrs Wb (refer to FIG. 17) produced on the metal members during the joining operation, radially extended portions 1a may be formed on the side surface of a rotating tool 1 near its tip portion. The radially extended portions 1a are formed on the rotating tool 1 in such a position that it is axially away from the tip portion 3 by a certain distance, which is the depth to which the tip portion of the rotating tool 1 is pressed. The radially extended portions 1a may also be used for holding the metal members down.

### [Surface Treatment]

The joining technique in accordance with the embodiment of the present invention applies to the surface treatment of metal members.

The surface treatment is applied to aluminum alloy castings, and the technique is used in the surface reforming treatment of, in particular, the portions between the adjacent ports (portions between valves) formed on a cylinder head, pistons and brake discs of automobiles. According to this technique, refinement of metal structure, uniform dispersion of eutectic silicon (Si) particles and decrease in casting defects can be realized by stirring the area of the aluminum alloy castings subjected to surface reforming treatment by the use of friction while keeping the same in a non-molten state, thereby the material characteristics, such as thermal fatigue (low cycle fatigue) life, elongation and impact resistance, more excellent than those obtained by the current remelting treatment can be obtained.

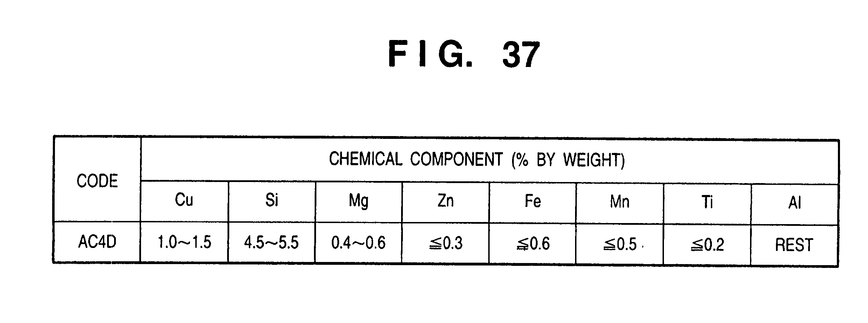

In the surface treatment according to the embodiment of the present invention, AC4D, which is an aluminum alloy standardized in accordance with JIS, was used as an example, as shown in FIG. 37; however, the component ratio of aluminum alloy castings can be changed within the following ranges: Mg content 0.2 to 1.5 % by weight; silicon (Si) content 1 to 24 % by weight, preferably 4 to 13 % by weight. And AC4B, AC2B, and AC8A for use in pistons can also be used. The reason that the upper limit of silicon content is set at 24 % is that, even if the content of silicon is increased to more than 24 %, the material characteristics and casting characteristics are saturated, moreover, the stirring characteristics deteriorate.

In aluminum alloy castings containing magnesium, their strength is increased when Mg₂Si is allowed to precipitate by heat treatment. However, in cases where the metal structure of the aluminum alloy castings is refined by melting the same, like the case of the remelting treatment, magnesium, of which melting point is low (650°C), can sometimes evaporate and its content is decreased. The decrease in magnesium content lowers the hardness and strength of the aluminum alloy castings even if they are subjected to heat treatment, which makes it impossible to obtain desired material characteristics.

On the other hand, in the surface treatment adopting stirring by the use of friction, metal structure is never melted and magnesium component will not evaporate; thus, the strength of aluminum alloy castings can be increased when Mg₂Si is allowed to precipitate by heat treatment.

Addition of silicon to aluminum alloys improves their castability (fluidity of molten metal, shrink characteristics and hot cracking resistance); however, eutectic silicon acts as a kind of defect, thereby their mechanical properties (elongation) deteriorate.

Eutectic silicon causes decrease in elongation, since it is hard and brittle and acts as the origin and propagation path of cracking. It also causes decrease in fatigue life particularly at the portions between valves which are subjected to thermal stress repeatedly. In metal structure, such eutectic silicon ranges along a dendrite; however, if the eutectic silicon is refined and uniformly dispersed, occurrence of cracking due to the concentration of stress and its propagation can be suppressed.

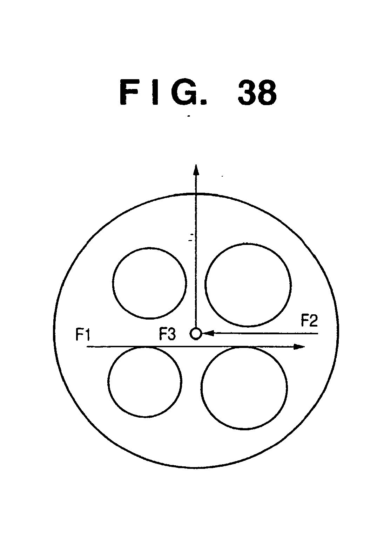

FIG. 38 is a view illustrating an example of the applications of the embodiment of the present invention to surface treatment, that is, illustrating a method of performing surface reforming treatment on the portion between the adjacent ports (the portion between valves) formed on a cylinder head of an automobile.

As shown in FIG. 38, the surface reforming treatment is performed in such a manner as to move a rotating tool 1 across the portion between the valves of the adjacent ports along the treatment locus F1-F3 while stirring the same portion by the use of friction caused by the rotating tool's motion.

The present invention applies to the joining of any materials other than steel plates for use in automobiles.

## Claims

1. A method of joining at least two metal plates (W1-W3) by lapping one over the other wherein the overlapping portions of the metal plates (W1-W3) are locally joined together by means of a rotor (1A, 1B), **characterized by** the steps of:
placing a pair of rotors (1A, 1B) to be opposite to each other and putting the overlapping portion of the metal plates between the rotors, each rotor (1A, 1B) having a concave portion (3a, 3b) formed substantially in the center of a planar tip portion (3) of the respective rotor (1A, 1B);
pressing the tip portions (3A, 3B) of the rotors (1A, 1B) against the overlapping portion of the metal plates (W1-W3) while rotating the rotors (1A, 1B) in opposite directions;
forming a non-molten stirred layer by stirring a joining portion of the metal plates (W1-W3) in a rotation direction of the rotors (1A, 1B) and in a direction of a thickness of the metal plates in the concave portion (3a, 3b) by the use of friction caused by the rotating motion and pressure of the rotors (1A, 1B) while keeping the joining portion in non-molten state.

2. The method according to claim 1, **characterized in that** concave and convex portions (3c) differing in height in the circumferential direction are formed on the tip portion of said rotors (1A, 1B).

3. The method according to claim 1, **characterized in that** said metal plates (W1-W3) are joined by allowing an alloy material, which can mutually diffuse with said metal plates, to intervene between said metal plates at the joining portion; and pressing and rotating said rotors (1A, 1B) against the joining portion of said metal plates, and stirring the same portion by the use of friction caused by the rotating motion of said rotors (1A, 1B) while keeping the same in a non-molten state, so as to form a non-molten stirred layer.

4. The method according to claim 1, **characterized in that** said metal plates (W1-W3) are joined while removing burrs produced on said metal plate in the vicinity of said rotors (1A, 1B) due to the rotating and pressing motion of said rotors (1A, 1B).

## Patentansprüche

1. Verfahren zum Verbinden von mindestens zwei Metallplatten (W1-W3), indem diese übereinander gelegt werden, wobei die sich überlappenden Abschnitte der Metallplatten (W1-W3) mit Hilfe eines Rotors (1A, 1B) lokal zusammengefügt werden, **gekennzeichnet durch** die folgenden Schritte:
zwei Rotoren (1A, 1B) werden einander gegenübergelegt und der überlappende Abschnitt der Metallplatten wird zwischen die Rotoren gelegt, wobei jeder Rotor (1A, 1B) einen konkaven Abschnitt (3a, 3b) aufweist, der im wesentlichen in der Mitte eines ebenen Spitzenabschnitts (3) des jeweiligen Rotors (1A, 1B) ausgebildet ist;
die Spitzenabschnitte (3A, 3B) der Rotoren (1A, 1B) werden gegen den überlappenden Abschnitt der Metallplatten (W1-W3) gepreßt, während die Rotoren (1A, 1B) in entgegengesetzte Richtungen gedreht werden; und
es wird eine nichtgeschmolzene gerührte Schicht gebildet, indem ein Verbindungsabschnitt der Metallplatten (W1-W3) **durch** die **durch** die Drehbewegung und den Druck der Rotoren erzeugte Reibung in einer Drehrichtung der Rotoren (1A, 1B) und in einer Richtung einer Dicke der Metallplatten in dem konkaven Abschnitt (3a, 3b) gerührt wird, während der Verbindungsabschnitt in einem nichtgeschmolzenen Zustand gehalten wird.

2. Verfahren nach Anspruch 1, **dadurch gekennzeichnet, daß** konkave und konvexe Abschnitte (3c) mit unterschiedlicher Höhe in Umfangsrichtung an dem Spitzenabschnitt der Rotoren (1A, 1B) ausgebildet werden.

3. Verfahren nach Anspruch 1, **dadurch gekennzeichnet, daß** die Metallplatten (W1-W3) zusammengefügt werden, indem ein Legierungsmaterial, das in die Metallplatten diffundieren kann, an dem Verbindungsabschnitt zwischen die Metallplatten eindringen gelassen wird; und indem die Rotoren (1A, 1B) gegen den Verbindungsabschnitt der Metallplatten gepreßt und gedreht werden und dieser Abschnitt durch die durch die Drehbewegung der Rotoren (1A, 1B) verursachte Reibung gerührt wird, während er in einem nichtgeschmolzenen Zustand gehalten wird, um eine nichtgeschmolzene gerührte Schicht zu bilden.

4. Verfahren nach Anspruch 1, **dadurch gekennzeichnet, daß** die Metallplatten (W1-W3) zusammengefügt werden, wobei Grate entfernt werden, die an der Metallplatte in der Nähe der Rotoren (1A, 1B) aufgrund der Dreh- und Preßbewegung der Rotoren (1A, 1B) erzeugt wurden.

## Revendications

1. Procédé pour joindre au moins deux plaques métalliques (W1-W3) en les faisant chevaucher l'une sur l'autre, les parties chevauchantes des plaques métalliques (W1-W3) étant jointes localement par l'intermédiaire d'un rotor (1A, 1B) **caractérisé en ce qu'**il comprend les étapes suivantes :
placement d'une paire de rotors (1A, 1B) de manière qu'ils soient opposés l'un à l'autre et mise des parties chevauchantes des plaques métalliques entre les rotors, chaque rotor (1A, 1B) comportant une partie concave (3a, 3b) formée sensiblement au centre d'une partie d'extrémité plane (3) du rotor respectif (1A, 1B) ;
appui des parties d'extrémité (3A, 3B) des rotors (1A, 1B) contre les parties chevauchantes des plaques métalliques (W1-W3) en faisant tourner les rotors (1A, 1B) dans des sens opposés ;
formation d'une couche remuée, non fondue en remuant une partie de jonction des plaques métalliques (W1-W3) dans un sens de rotation des rotors (1A, 1B) et dans la direction de l'épaisseur des plaques métalliques dans la partie concave (3a, 3b) en utilisant le frottement provoqué par le mouvement rotatif et la pression des rotors (1A, 1B) en maintenant la partie de jonction dans un état non fondu.

2. Procédé selon la revendication 1, **caractérisé en ce que** des parties concave et convexe (3c), qui varient en hauteur dans le sens circonférentiel, sont formées sur la partie d'extrémité desdits rotors (1A, 1B).

3. Procédé selon la revendication 1, **caractérisé en ce que** lesdites plaques métalliques (W1-W3) sont jointes en permettant à un matériau d'alliage, qui est capable d'effectuer une diffusion mutuelle avec lesdites plaques métalliques, d'intervenir entre lesdites plaques métalliques sur la partie de jonction ; et en appuyant et en faisant tourner lesdits rotors (1A, 1B) contre la partie de jonction desdites plaques métalliques, et en remuant la même partie en utilisant le frottement provoqué par le mouvement rotatif desdits rotors (1A, 1B) en maintenant celles-ci dans un état non fondu afin de former une couche remuée non fondue.

4. Procédé selon la revendication 1, **caractérisé en ce que** lesdites plaques métalliques (W1-W3) sont jointes pendant l'élimination de bavures sur ladite plaque métallique au voisinage desdits rotors (1A, 1B) qui sont dues au mouvement rotatif et appuyant desdits rotors (1A, 1B).
